# EUROPEAN PATENT SPECIFICATION

(11) **EP 1 650 076 B1**
(45) Date of publication and mention of the grant of the patent: **06.06.2012**
(21) Application number: 05425730.8
(22) Date of filing: 18.10.2005
(51) Int. Cl.: B60N 2/60, B60N 2/44, A47C 7/20, A47C 27/14

(54) **A seat for cars and the like with replaceable parts**
Autositz und dergleichen mit austauschbaren Teilen
Siège pour une voiture et autres avec des parties remplaçables

(30) Priority: 20.10.2004 IT FI20040214
(43) Date of publication of application: 26.04.2006
(73) Proprietor: Cavallaro, Marco, 50013 Campi Bisenzio, Fizenze (IT)
(72) Inventor: Cavallaro, Marco, 50013 Campi Bisenzio, Fizenze (IT)
(74) Representative: Mannucci, Michele

(56) References cited:
- WO-A-2004/071801
- FR-A- 2 792 585
- FR-A1- 2 698 832
- GB-A- 2 263 396
- US-A- 5 690 384
- US-A- 5 758 924

## Description

In motor vehicles, especially in cars, and in other applications, the sitting surface and/or backrest of a seat are frequently made with upholstery covering fabric that is different in two areas, namely, between the central part and the perimetral parts of the resting surfaces.

It is also frequently required to replace the upholstery fabric and in particular the central parts thereof, which characterize the color and the design, whether during production of the car or in order to re-style it, or else in the case of damage or wear, as well as just to change the appearance. The latter requirement frequently arises also as a choice at the moment of purchase of a new motor vehicle or of a second-hand motor vehicle, and above all enables characterization of the color of the seat at the last moment, even, for example, when the vehicle is handed over to the customer.

Generally, this consequently entails a complex work of replacement that can be carried out only by highly specialized personnel and also entails the availability of complete upholstery fabric kits (i.e., with both the central parts and the side parts) and hence involves burdensome warehousing problems.

US 5 690 384 discloses a seat according to the preamble of claim 1.

The above and other drawbacks are eliminated or at least considerably attenuated by the present invention which concerns a seat having the features of claim 1.

According to the invention, the central part of the sitting surface and/or of the backrest (with corresponding upholstery fabric) of a seat for cars and the like is made independently of the structure comprising the perimetral parts of said sitting surface and/or of said backrest, and the respective rigid structures. There are provided means for a convenient anchorage and release of said central part in order to enable its replacement, at the moment of purchase of the vehicle and/or also in a vehicle already in use.

Said means are accessible from the back of said central part for constraining and releasing said central part, and appendages and means for engagement thereof are provided, as well as additional retention means.

The central part of the sitting surface has the rear end, which is designed to penetrate under the backrest and is equipped with at least one appendage for engagement to the rigid structure of the seat, accessible at the rear underneath the backrest.

Said central part of the sitting surface may have, at the bottom, a flexible element of sufficient length for being introduced into a corresponding shaped hole made in the rigid structure of the sitting surface. Engaged to said flexible element is a core shaped so as to pass through a wider area of said hole and so as to provide an elastic contrast with the edges of a narrower area of said hole. The flexible element can conveniently be maneuvered from a space present and accessible underneath the rigid structure of the sitting surface.

In a possible embodiment, the central part of the backrest has, at the top, appendages designed to be inserted in seats defined by a centering rib or equivalent means of the rigid structure of the backrest. At a distance from said appendages there can be provided elastic lips designed to react on a cross member of said rigid structure to ensure fixing of said appendages, whilst a bottom prolongation embraces said cross member and is equipped with sectional elements for engagement and retention thereof.

In a multiple rear seat for cars and other equivalent applications, sitting-surface parts and/or backrest parts may be provided, separated from the overall development of the sitting surface and of the backrest of said multiple seat. The sitting surface and backrest have housings for receiving said sitting-surface and backrest parts, which are received therein with limited friction.

The extractable and replaceable backrest parts can be equipped with upholstery fabric covering stably anchored to said parts, or can be covered as required with an upholstery covering that can be engaged stably to the soft core of the central part.

For a better understanding of the invention, there now follows a description with reference to the attached drawings, which show a practical non-limiting example of embodiment of the invention. In the drawings:
- Figure 1 shows a front view of a seat, in particular the front seat of a motor vehicle, viewed according to the arrow f1 of Figure 2;
- Figure 2 shows a cross section taken along the line of section II-II of Figure 1;
- Figures 3 and 4 show, respectively, an enlarged detail of Figure 2 and a view taken along the line of section IV-IV of Figure 3;
- Figure 5 is an exploded view of the components illustrated in Figure 2;
- Figure 6 is a rear view taken along the line of section VI-VI of Figure 2;
- Figure 7 is a perspective view of a multiple rear seat with some components removed;

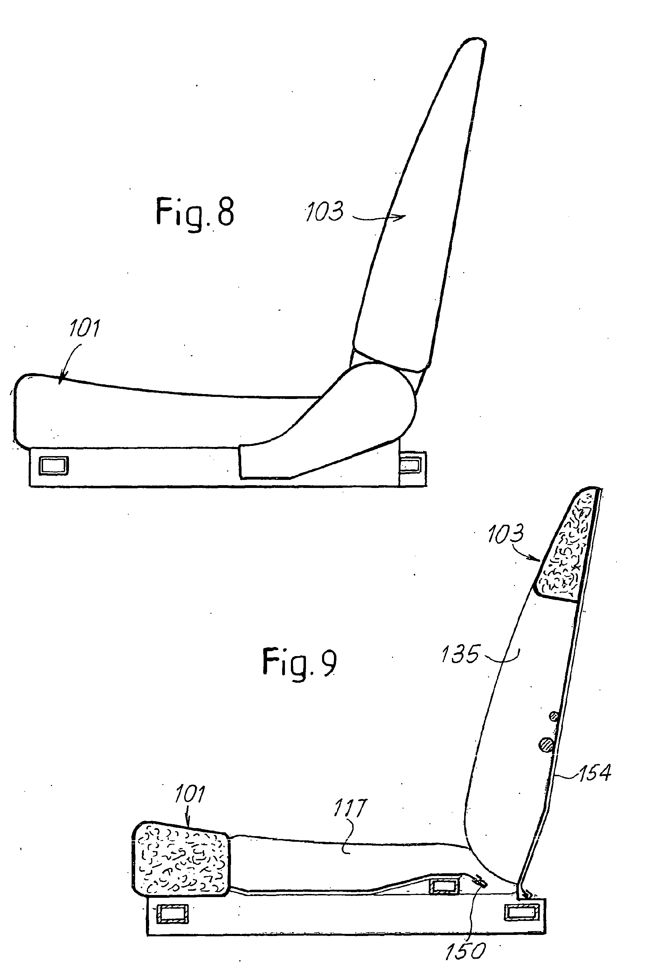

- Figures 8, 9 and 10 are, respectively, a view according to the line VIII-VIII of Figure 7 and cross sections taken along the lines of section IX-IX and X-X of Figure 7;
- Figure 11 is a perspective view of an enlarged detail of the area indicated by the arrow f11 of Figure 10; and
- Figure 12 shows a variant embodiment of components similar to those of Figure 11.

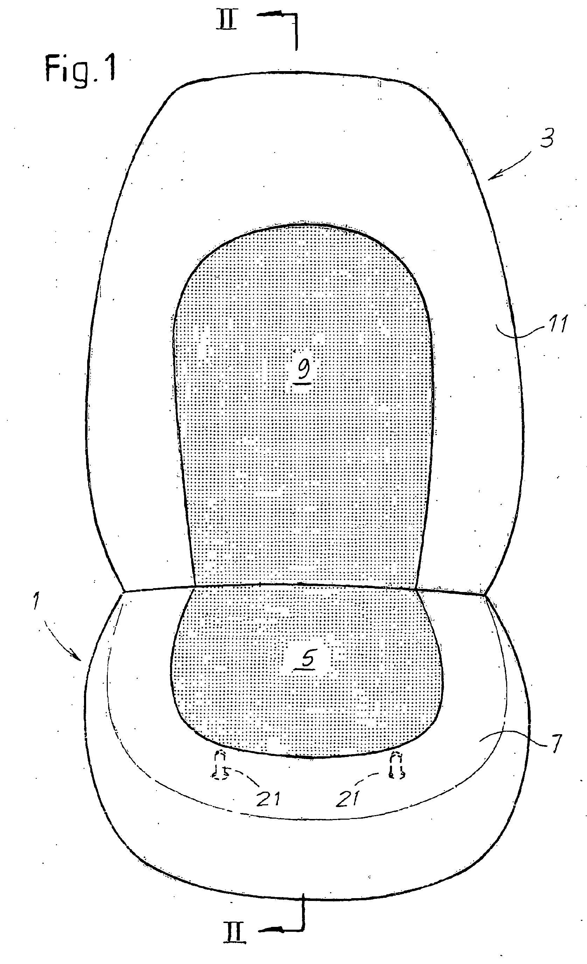

According to what is illustrated in the drawings and with initial reference to Figures 1 to 6, number 1 designates the sitting surface of the seat, and number 3 designates the backrest of the seat.

The sitting surface 1 comprises a central part 5 and a perimetral part 7 that surrounds at least partially the central part 5. Designated by 9 is the central part of the backrest 3, surrounded by a perimetral part 11, which develops at least partially around the central part 9.

According to the invention, the central part 5 and the central part 9 are altogether separate from the corresponding perimetral parts 7 and 9, respectively, and said central parts 5 and 9 can be moved away from one another and can be inserted into the complex of the structure of the sitting surface and of the structure of the backrest, respectively.

The perimetral part 7 is stably attached to the structure 15 for strengthening and supporting the seat, which comprises, among other things, a shaped plate 15A or an equivalent structure. The perimetral part 7 and the structure 15, 15A define a housing 17, in which the central part 5 of the seat can be received, said part 5 being separated from the perimetral part 7 and being anchorable to and removable from said housing 17.

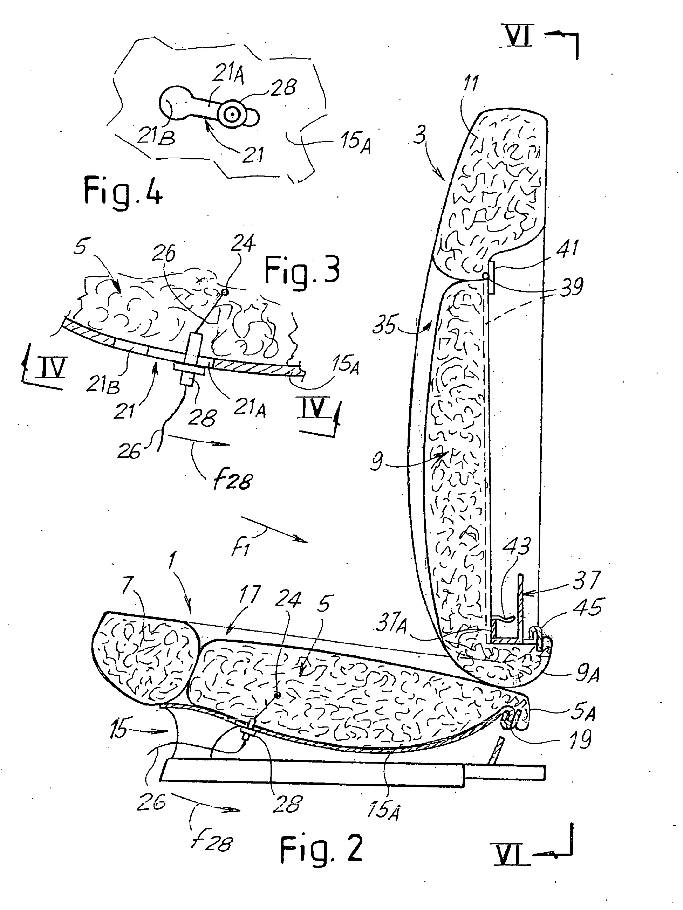

According to a possible solution, the central part 5 of the sitting surface comprises, at the rear end 5A, a channel section 19, which can be anchored to an edge 15B formed at the rear by the shaped plate 15A of the supporting structure 15A of the sitting surface. Furthermore, there is provided, along the bottom surface 5C of the central part of the sitting surface, one hole 21, or advantageously two holes 21 (illustrated schematically in Figures 1 and 2 and illustrated in greater detail in Figures 3 and 4). Each of said holes has a narrower part 21A that develops in the direction of the backrest, i.e., in the direction of the rear part of the sitting surface, whilst in the front part each hole 21 has an enlargement 21B that, instead, is located towards the front end of the sitting surface. Anchored in 24 in the central part 5 of the sitting surface is a relatively long flexible filament element 26, which projects from the bottom surface of the central part 5 and engaged to which is a shaped protuberance. 28. Said protuberance 28 can be housed with the narrower part in the narrower area 21A of the hole 21, whilst the wider part of said protuberance 28 can pass through the hole 21 in the wider area 21 B. The central part 5 of the sitting surface is placed in the housing 17 within the perimetral part 7, with due care being taken to make sure that each flexible element 26 is made to pass through the hole 21 and can be reached from the front of the sitting surface, in the space that is formed by the structure 15 for supporting said sitting surface, as may be seen in particular in Figure 2. Since the flexible element 26 is elastic, once it is released after being tensioned so that the protuberance can pass through the part 21 B of the hole, it recalls the protuberance 28 substantially in the direction indicated by the arrow f28 of Figure 3, so that the narrower part of the protuberance 28 penetrates in the narrower part 21A of the hole 21, and the wider part contrasts against the edges of the of the hole 21A and withholds the part 5 in the housing 17. When, instead, the flexible element 26 is pulled in a direction opposite to the direction indicated by the arrow 28, the protuberance is brought into a position corresponding to the wider part 21B of the hole 21 so that the protuberance 28 can pass through the hole 21 and hence the central part 5 can be lifted from the laminar structure 15A of the rigid supporting part 15. In order to engage the central part 5 of the sitting surface securely, the rear end 5A of said central part 5 is provided with the channel section 19, which is engaged to the rear edge 15B formed by the shaped plate 15A of the supporting structure 15 of the sitting surface, as may be clearly seen in Figure 2. In this way, stability of the central part 5 in the housing 17 formed in the perimetral part 7 of the sitting surface is ensured.

In order to remove the central part 5, it is necessary to pull the two elastic filaments 26 in the direction opposite to the one indicated by the arrow f28 of Figures 3 and 2 in order to get the protuberance 28 to pass through the wider part 21B of each of the holes 21A and to lower the channel section 19 in order to release it from the edge 15B of the element 15A of the structure 15 to free the rear end 5A of the central part 5 from the rigid structure 15. In this way, it is possible to remove said central part 5 from the housing 17 delimited by the perimetral part 7 of the sitting surface.

The arrangement described above can be adopted for the majority of cars currently manufactured with minor modifications. However, any other engagement system may be provided, according to the particular morphology of the supporting structure 15 of the sitting surface of the front seat of a car.

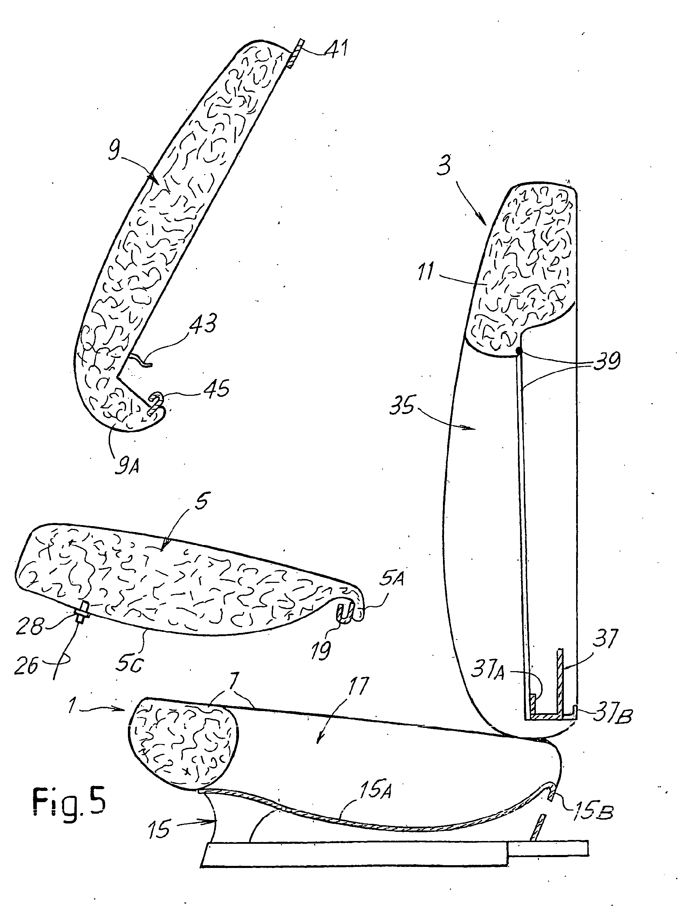

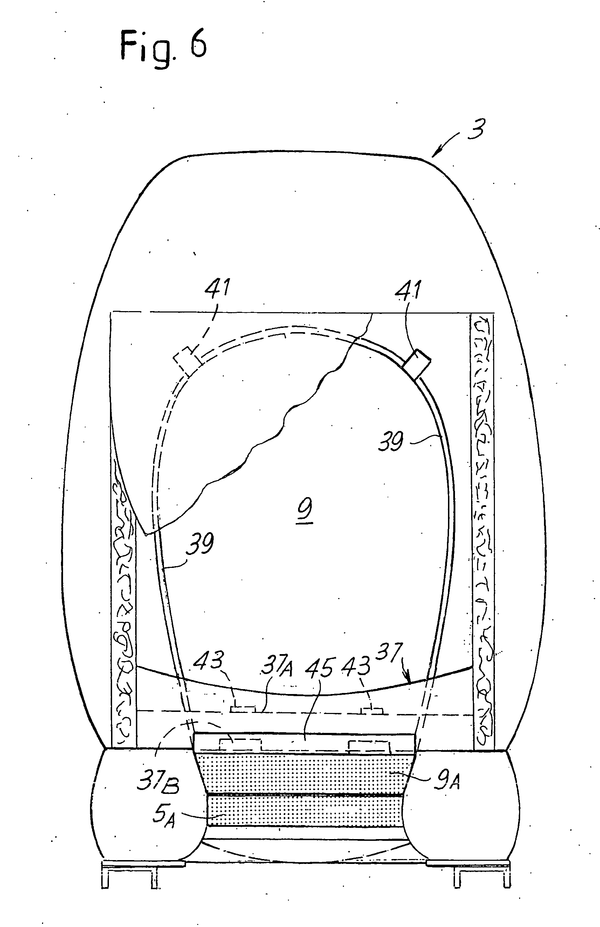

The backrest 3 of the seat illustrated in Figures 1 to 6 has the perimetral part 11 that is completely separate from the central part 9 and that defines a housing 35, which is completed by a rigid part of which there is represented a bottom shaped sectional element 37 and a centering rib 39, as well as other components that may vary from vehicle to vehicle. The central part 9 of the backrest can be received in the housing 35 and, with its own bottom end 9A, can embrace the sectional element 37 when it is received in the housing 35. A frame, with which the central part 9 of the backrest is equipped, forms two top appendages 41, which are designed to be inserted behind the centering rib 39, as may be clearly seen in Figures 2 and 6. Also forming part of said frame of the central part 9 are two elastic appendages 43, which can co-operate with a lip 37A of the sectional element 37. The frame of said central part 9 also forms a sectional element 45, which is designed to co-operate with two appendages 37B of the sectional element 37 as may be clearly seen in Figures 5 and 2.

It is clear that, in order to engage the central part 9 in the housing 35 of the backrest, said part 9 presents in such a way that it can be inserted with the appendages 41 on the top part of the centering rib 39, and in this configuration the part 9 is stabilized by elastic reaction of the elastic appendages 43 on the edge 37A of the sectional element 37. By slightly deforming the end 9A, the profile 45 is brought to engage with the appendages 37B of the sectional element 37. With a reverse operation it is possible to free the central part 9 from the backrest.

From what has been described above, it is clear that the central parts, such as the ones designated by 5 and 9, can both be readily replaced at the moment, for example, when a new vehicle is handed over to the customer, it being possible for the customer to choose between a plurality of said parts 5 and 9, upholstered using different fabrics. The same may be said when is it is desired to replace the central parts 5 and 9 in a used vehicle in order to achieve a new appearance with a different upholstery covering of the parts 5 and 9, i.e., with replacement of said parts 5 and 9.

Not excluded is also the possibility for the central parts, like the ones 5 and 9, of the seats of a vehicle to be upholstered as required with an overlay-like upholstery covering or in any case one that can be applied in a quite convenient and stable way on the components 5 and 9, rather than having available replaceable components 5 and 9. This solution may become problematical when the components 5 and 9 are in a used condition and hence partially deformed by compression during use, so that the solution defined previously, which contemplates total replacement of the components 5 and 9, may be more convenient.

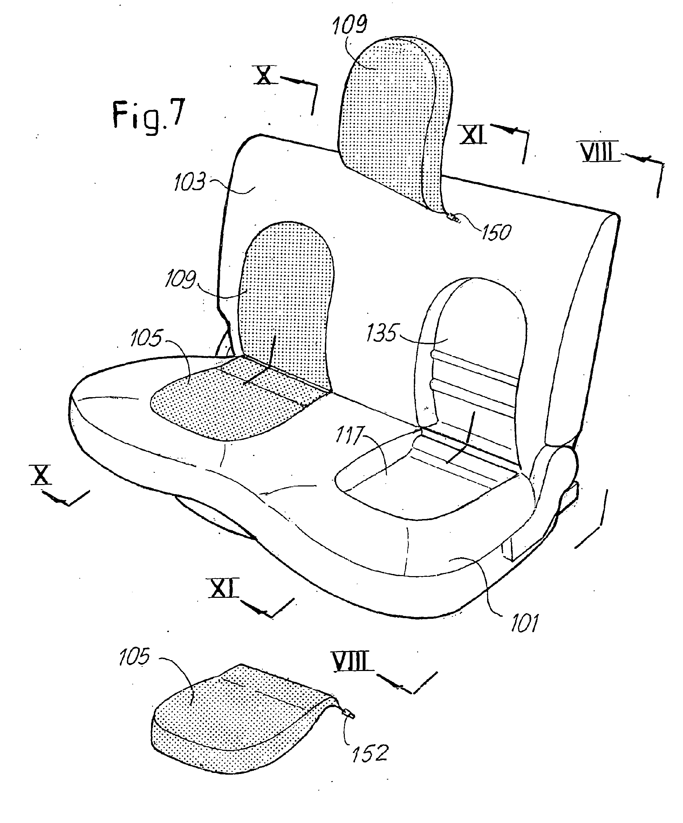

Figure 7 and the following figures provide a solution similar to the one already described, for a complex of seats, mainly of the type like the ones frequently provided as rear seats in the passenger compartments of saloon-type motor vehicles, which are equipped with central parts on two or possibly even three sitting surfaces of one and the same complex of seats, having different upholstery fabric coverings. Also these central parts can be replaced with the same criterion referred to above.

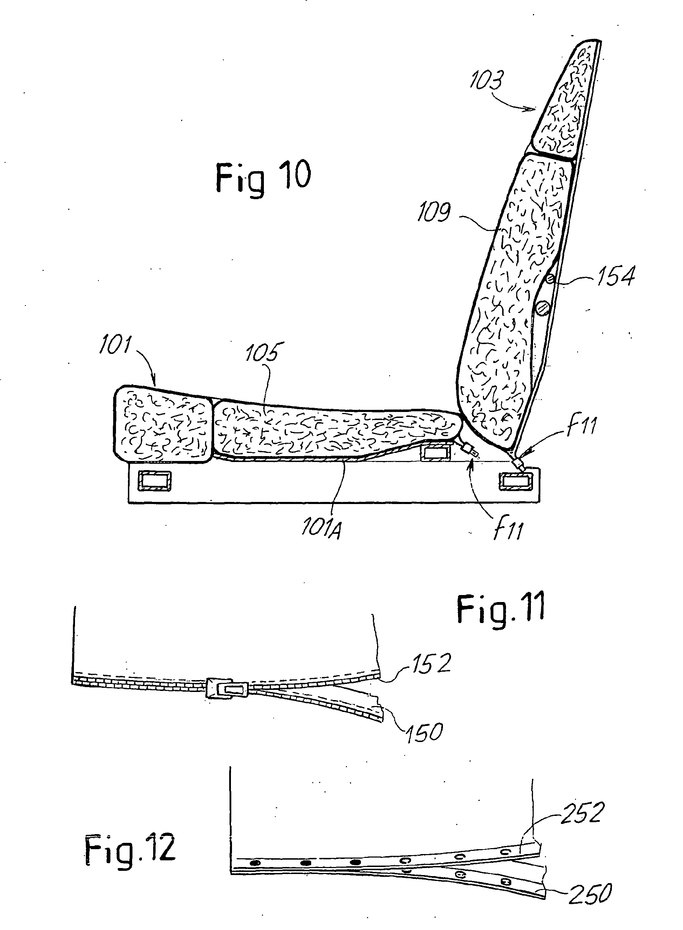

According to the example of Figure 7 and the following ones, provided in the sitting surface 101 and in the backrest 103 are housings like the ones 117 and 135, for removable parts 105 and 109 corresponding, respectively, to the ones 5 and 9, in order to enable fast replacement. Since, in this case, there would be fewer chances of stresses during use, it is possible to envisage also a simple solution of insertion with limited friction of the parts 105 and 109 in the housings 117 and 135 mentioned above. In addition, it may be possible to provide, in particular for anchorage of the portion 105 - to be received in the housing 135 of the backrest 103 -, on the one hand, an element 152 (see Figure 11) forming part of a sliding closing element or so-called zip fastener, anchored to the component 105 and, on the other, a similar element 150 forming part of or engaged to the structure combined to the sitting surface 101. With the coupling between the two components 150 and 152 a rear connection of the removable part 105 of the sitting surface 101 is ensured. A similar arrangement can be provided between an element equivalent to the one designated by 152, which is fixed to the removable part 109, and an element corresponding to the one designated by 150, which can instead be engaged to the bottom end of a rear covering 154, which is frequently provided for finishing the backrest 103 at the back.

As an alternative to a solution of coupling formed by components like the ones designated by 150, 152 with a sliding closing element or so-called zip fastener, arrangements with snap-action press studs may be provided, as illustrated in detail in Figure 12, for components 250 and 252 equivalent to the ones designated by 150 and 152 in Figures 10 and 11.

## Claims

1. A seat for motor cars and the like, with sitting surface and backrest, wherein a central part (5) of the sitting surface (1) and a separate central part (9) of the backrest (3) with corresponding upholstery fabric covering are made independent from one another and of the structure comprising the perimetral parts (7 and 11) of said sitting surface (1) and of said backrest (3) and respective rigid structures, and wherein anchoring means are provided for a convenient anchorage and for a convenient release of said central parts in order to enable replacement thereof or of its fabric covering at the moment of purchase of the vehicle and/or during use thereof, **characterized in that** said anchoring means are accessible from the back of said central parts (5, 9), for constraint and release of said central parts (5, 9), and that the rear end of the central part (5) of the sitting surface (1) is designed to penetrate under the backrest and is equipped with at least one appendage (19) for engagement to the rigid structure (15) of the seat, accessible at the rear of, and underneath, the backrest.

2. The seat according to Claim 1, **characterized in that** said central part (5) of the sitting surface has a channel section (19), which can be anchored to an edge (15B) formed at the rear by a shaped plate (15A) of the supporting structure (15) of the sitting surface (1).

3. The seat according to Claim 1 or 2, **characterized in that** said central part (5) of the sitting surface has at the bottom at least one flexible element (26) of a length sufficient for being introduced into a corresponding shaped hole (21) made in the rigid structure (15, 15A) of the sitting surface, there being engaged to said flexible element a shaped core (28) for penetrating into a wider area (21 B) of said hole (21) and for resiliently contrast with the edges of a narrower area (21A) of said hole; the flexible element (26) being accessible and maneuverable from a space present under the rigid structure (15, 15A) of the sitting surface.

4. The seat according to claim 1 or 2 or 3, **characterized in that** the central part (9) of the backrest has, at the top, appendages (41) designed to be inserted into housings defined by a centering rib or equivalent member of the rigid structure of the backrest, and, at a distance from said appendages, elastic lips (43) designed to react on a cross member (37A) of said rigid structure to ensure loading in order to bring about a siotting-in of said appendages (41), and a bottom prolongation (9A), which embraces said cross member (37) and is equipped with a sectional element (45) for engagement and retention to said cross member (37).

5. The seat according to at least one of the preceding claims, **characterized in that** the replaceable central part of the sitting surface and said replaceable central part of the backrest can be equipped as required with an overlay covering.

## Patentansprüche

1. Sitz für Kraftfahrzeuge und dergleichen mit einer Sitzfläche und einer Rückenlehne, wobei ein Mittenteil (5) der Sitzfläche (1) und ein separater Mittenteil (9) der Rückenlehne (3) mit entsprechenden Polsterstoffabdeckungen unabhängig von einander hergestellt werden und von einem Aufbau sind mit den Randteilen (7 und 11) der Sitzfläche (1) und der Rückenlehne (3) und jeweiligen starren Strukturen, und wobei Verankermittel vorgesehen sind für eine bequeme Verankerung und für ein bequemes Lösen der Mittenteile, um ihren Ersatz oder den ihres Stoffbezuges beim Verkauf des Fahrzeugs und/oder während dessen Nutzung zu ermöglichen, **dadurch gekennzeichnet, dass** die Verankerungsmittel von der Rückseite der Mittenteile (5, 9) zum Festlegen und Freigeben der Mittenteile (5, 9) zugänglich sind und dass das Rückende des Mittenteils (5) der Sitzfläche (1) ausgebildet ist, um unter die Rückenlehne vorzudringen, und mit zumindest einem Ansatz (19) versehen ist für den Eingriff mit der starren Struktur (15) des Sitzes, der an der Rückseite der Rückenlehne und unterhalb der Rückenlehne zugreifbar ist.

2. Sitz nach Anspruch 1, **dadurch gekennzeichnet, dass** der Mittenteil (5) der Sitzfläche einen Kanalabschnitt (19) aufweist, der mit einer Kante (15B), die an der Rückseite durch eine geformte Platte (15A) der Trägerstruktur (15) der Sitzfläche (1) gebildet ist, verankert werden kann.

3. Sitz nach Anspruch 1 oder 2, **dadurch gekennzeichnet, dass** der Mittenteil (5) der Sitzfläche am Boden zumindest ein flexibles Element (26) einer Länge aufweist, die ausreichend ist, um in eine entsprechend geformte Öffnung (21), die in der starren Struktur (15, 15A) der Sitzfläche vorgesehen ist, eingebracht zu werden, dort mit dem flexiblen Element mit einem geformten Kern (28) zum Eindringen in einen breiteren Bereich (21B) der Öffnung (21) eingebracht werden kann und zum elastischen Anstoßen an die Kanten eines schmaleren Bereichs (21A) der Öffnung, wobei das flexible Element (26) über einen Raum, der unterhalb der starren Struktur (15, 15A) der Sitzfläche vorgesehen ist, zugreifbar und betätigbar ist.

4. Sitz nach Anspruch 1, 2 oder 3, **dadurch gekennzeichnet, dass** der Mittenteil (9) der Rückenlehne an seinem Oberteil Ansätze (41) aufweist, die in Gehäuse eingebracht werden können, die durch eine Zentrierrippe oder ein äquivalentes Element der starren Struktur der Rückenlehne gebildet sind, in einem Abstand von den Ansätzen, wobei elastische Lippen (43) ausgebildet sind, um mit einem Kreuzelement (37A) der starren Struktur zusammenzuwirken, um eine Belastung sicher zu stellen, um ein Einschieben der Ansätze (41) zu bewirken und mit einer Bodenverlängerung (9A), die das Kreuzelement (37) umgibt und mit einem Abschnittselement (45) zum Eingriff und zum Halten des Kreuzelementes (37) versehen ist.

5. Sitz nach zumindest einem der vorstehenden Ansprüche, **dadurch gekennzeichnet, dass** der ersetzbare Mittenteil der Sitzfläche und der ersetzbare Mittenteil der Rückenlehne wie erforderlich mit einer Überzugsabdeckung versehen werden können.

## Revendications

1. Siège pour voitures automobiles et analogues, avec une surface d'assise et un dossier, dans lequel une partie centrale (5) de la surface d'assise (1) et une partie centrale séparée (9) du dossier (3) avec une couverture en tissu d'ameublement correspondant sont réalisées indépendamment l'une de l'autre et de la structure comprenant les parties périmétriques (7 et 11) de ladite surface d'assise (1) et dudit dossier (3) et des structures rigides respectives, et dans lequel des moyens d'ancrage sont prévus pour un ancrage pratique et pour une libération pratique desdites parties centrales afin de permettre le remplacement de celles-ci ou de leur couverture en tissu au moment de l'achat du véhicule et/ou durant son utilisation, **caractérisé en ce que** lesdits moyens d'ancrage sont accessibles à partir de l'arrière desdites parties centrales (5, 9), pour la fixation et la libération desdites parties centrales (5, 9), et l'extrémité arrière de la partie centrale (5) de la surface d'assise (1) est conçue pour pénétrer sous le dossier et est équipée d'au moins un appendice (19) pour entrer en prise avec la structure rigide (15) du siège, accessible à l'arrière et en dessous du dossier.

2. Siège selon la revendication 1, **caractérisé en ce que** ladite partie centrale (5) de la surface d'assise comporte une section en U (19), qui peut être ancrée à un bord (15B) formé à l'arrière par une plaque façonnée (15A) de la structure de support (15) de la surface d'assise (1).

3. Siège selon la revendication 1 ou 2, **caractérisé en ce que** ladite partie centrale (5) de la surface d'assise comporte, dans la partie inférieure, au moins un élément flexible (26) d'une longueur suffisante pour être introduit dans un trou formé correspondant (21) réalisé dans la structure rigide (15, 15A) de la surface d'assise, un noyau façonné (28) étant en prise avec ledit élément flexible pour pénétrer dans une zone plus large (21B) dudit trou (21) et pour présenter un contraste résilient avec les bords d'une zone plus étroite (21A) dudit trou ; l'élément flexible (26) étant accessible et manoeuvrable à partir d'un espace présent sous la structure rigide (15, 15A) de la surface d'assise.

4. Siège selon la revendication 1 ou 2 ou 3, **caractérisé en ce que** la partie centrale (9) du dossier comporte, dans la partie supérieure, des appendices (41) conçus pour être insérés dans des logements définis par une nervure de centrage ou un élément équivalent de la structure rigide du dossier, et, à une distance desdits appendices, des lèvres élastiques (43) conçues pour réagir sur un élément transversal (37A) de ladite structure rigide pour garantir un chargement afin d'entraîner une insertion desdits appendices (41), et un prolongement inférieur (9A), qui embrasse ledit élément transversal (37) et est équipé d'un élément sectionnel (45) pour l'entrée en prise avec et la retenue sur ledit élément transversal (37).

5. Siège selon au moins une des revendications précédentes, **caractérisé en ce que** la partie centrale remplaçable de la surface d'assise et ladite partie centrale remplaçable du dossier peuvent être équipées, selon les nécessités, d'une couverture de recouvrement.
